# EUROPEAN PATENT SPECIFICATION

(11) **EP 3 998 575 B1**
(45) Date of publication and mention of the grant of the patent: **27.12.2023**
(21) Application number: 21202277.6
(22) Date of filing: 12.10.2021
(51) Int. Cl.: G06T 3/00, H04N 1/401, H04N 1/48, H04N 1/58, H04N 9/64, H04N 23/15, H04N 25/701, G06T 3/40

(54) **IMAGE CORRECTION DEVICE**
BILDKORREKTURVORRICHTUNG
DISPOSITIF DE CORRECTION D'IMAGES

(30) Priority: 12.10.2020 JP 2020172103
(43) Date of publication of application: 18.05.2022
(73) Proprietor: NEC Corporation, Tokyo 108-8001 (JP)
(72) Inventor: MONDEN, Akira, Tokyo 108-8001 (JP)
(74) Representative: Vossius & Partner Patentanwälte Rechtsanwälte mbB

(56) References cited:
- JP-A- 2016 110 320
- GALBRAITH AMY E. ET AL: "Resampling methods for the MTI coregistration product", ALGORITHMS AND TECHNOLOGIES FOR MULTISPECTRAL, HYPERSPECTRAL, AND ULTRASPECTRAL IMAGERY XIX - PROCEEDINGS OF SPIE, vol. 5093, 23 September 2003 (2003-09-23), pages 283-293, XP055909079, US ISSN: 0277-786X, DOI: 10.1117/12.485985 ISBN: 978-1-5106-4548-6
- JAMES E. ADAMS: "Interactions between color plane interpolation and other image processing functions in electronic photography", PROCEEDINGS OF SPIE, vol. 2416, 5 February 1995 (1995-02-05), pages 144-151, XP055124141, ISSN: 0277-786X, DOI: 10.1117/12.204825
- EASTMAN R D ET AL: "Image Registration for Remote Sensing, Chapter 3: Survey of Image Registration Methods", 24 March 2011 (2011-03-24), IMAGE REGISTRATION FOR REMOTE SENSING, CAMBRIDGE UNIVERSITY PRESS, CAMBRIDGE [U.A.], PAGE(S) 35 - 76, XP002717932, ISBN: 978-0-521-51611-2 * Section 3.5; figure 3.1 *
- CHRISTOPH C BOREL ET AL: "Novel methods for panchromatic sharpening of multi/hyper-spectral image data", GEOSCIENCE AND REMOTE SENSING SYMPOSIUM,2009 IEEE INTERNATIONAL,IGARSS 2009, IEEE, PISCATAWAY, NJ, USA, 12 July 2009 (2009-07-12), pages IV-757, XP031630932, ISBN: 978-1-4244-3394-0

## Description

The present invention relates to an image correction device, an image correction method, and a program.

As a device for acquiring images of a ground surface from an aircraft or a satellite, a pushbroom-type image acquisition device has been widely adopted. A device of this type is configured so as to acquire a line-shaped image extending in the X axis direction by using a one-dimensional array sensor as an image sensor. Then, with translation of the entire image acquisition device in the perpendicular direction (Y axis direction) with respect to the line-shaped acquired image by the movement of the aircraft or the satellite, a two-dimensional image is formed. Further, in the case of acquiring images of a plurality of wavelength bands by using an image acquisition device of this type, the device is configured to image a subject with a plurality of filters, in each of which the band that is a wavelength band of light to be transmitted is different, attached to each of the one-dimensional array sensors. An image of each wavelength band is called a band image.

For example, Patent Literature 1 discloses a technology of reducing a color shift caused in an image acquisition device of this type, by means of a combination of band image shifting corresponding to the position shift quantity and general interpolation processing such as a linear interpolation method.

The documents GALBRAITH AMY E. ET AL: "Resampling methods for the MTI coregistration product",ALGORITHMS AND TECHNOLOGIES FOR MULTISPECTRAL, HYPERSPECTRAL, AND ULTRASPECTRAL IMAGERY XIX - PROCEEDINGS OF SPIE, vol. 5093, 23 September 2003 (2003-09-23), pages 283-293, JAMES E. ADAMS: "Interactions between color plane interpolation and other image processing functions in electronic photography",PROCEEDINGS OF SPIE, vol. 2416, 5 February 1995 (1995-02-05), pages 144-151, and EASTMAN R D ET AL: "Image Registration for Remote Sensing, Chapter 3: Survey of Image Registration Methods", 24 March 2011 (2011-03-24), IMAGE REGISTRATION FOR REMOTE SENSING, CAMBRIDGE UNIVERSITY PRESS, CAMBRIDGE [U.A.], PAGE(S) 35 - 76 disclose various methods of interpolating pixel values at the subpixel shifted positions.

Patent Literature 1 : JP 6305328 B

When distortion is caused by the characteristics of the optical system, a phase difference is generated between bands, and a color shift may be caused by the phase difference. A color shift caused by a phase difference in this context means that in the case of imaging the same subject by a plurality of bands such as RGB (red, green, blue) for example, the color of the same portion of the subject may be different from that of the subject depending on the position of the portion in the pixel of each band. Such a color shift caused by a phase shift is difficult to be reduced by a combination of band image shifting corresponding to the position shift quantity and general interpolation processing such as a linear interpolation method at the time of correcting the color shift.

The present disclosure is defined by the independent claims. Dependent claims refer to preferred embodiments. Unless explicitly indicated as "embodiment(s) according to the claimed invention", any embodiment [example, aspect, implementation, ... ] in the description may include some but not all features as literally defined in the claims and are present for illustration purposes only.

An exemplary object of the present invention is to provide an image correction device that solves the above-described problem, that is, a problem that it is difficult to reduce a color shift, caused by a phase shift, by means of a combination of band image shifting and general interpolation processing such as a linear interpolation method.

An image correction device, according to one exemplary aspect of the present invention, is configured to include
a band image acquisition means for acquiring a plurality of band images obtained by imaging a subject;
a position difference acquisition means for, by using at least one of the band images as a reference band image and at least one of the rest of the band images as an object band image, acquiring a position difference between the object band image and the reference band image;
a corrected band image creation means for, by using a pixel of the object band image as an object pixel and using each of a plurality of pixels of the reference band image that overlap the object pixel when the object pixel is shifted by the position difference as a corresponding pixel, creating a corrected band image that holds a pixel value of light on the object band image at a pixel position of the reference band image, on the basis of a relationship between pixel values of a plurality of the corresponding pixels; and
a corrected band image output means for outputting the corrected band image.

Further, an image correction method, according to another exemplary aspect of the present invention, is configured to include
acquiring a plurality of band images obtained by imaging a subject;
by using at least one of the band images as a reference band image and at least one of the rest of the band images as an object band image, acquiring a position difference between the object band image and the reference band image;
by using a pixel of the object band image as an object pixel and using each of a plurality of pixels of the reference band image that overlap the object pixel when the object pixel is shifted by the position difference as a corresponding pixel, creating a corrected band image that holds a pixel value of light on the object band image at a pixel position of the reference band image, on a basis of a relationship between pixel values of a plurality of the corresponding pixels;
and outputting the corrected band image.

Further, a program, according to another exemplary aspect of the present invention, is configured to cause a computer to perform processing of:
acquiring a plurality of band images obtained by imaging a subject;
by using at least one of the band images as a reference band image and at least one of the rest of the band images as an object band image, acquiring a position difference between the object band image and the reference band image;
by using a pixel of the object band image as an object pixel and using each of a plurality of pixels of the reference band image that overlap the object pixel when the object pixel is shifted by the position difference as a corresponding pixel, creating a corrected band image that holds a pixel value of light on the object band image at a pixel position of the reference band image, on a basis of a relationship between pixel values of a plurality of the corresponding pixels;
and outputting the corrected band image.

With the configurations described above, the present invention enables reduction of a color shift caused by a phase shift.

Fig. 1 is a block diagram illustrating an image correction device according to a first exemplary embodiment of the present invention.
Fig. 2 is a schematic diagram for explaining a phenomenon in which the same portion of a subject is imaged at a different position in a pixel of each band in a pushbroom-type image acquisition device.
Fig. 3 is a diagram for explaining a position difference between pixels of an object band image.
Fig. 4 is a table illustrating an exemplary configuration of position difference information of an R-band image.
Fig. 5 is a flowchart of an exemplary operation of the image correction device according to the first exemplary embodiment of the present invention.
Fig. 6 is a block diagram illustrating an example of a position difference acquisition unit in the image correction device according to the first exemplary embodiment of the present invention.
Fig. 7 is a flowchart illustrating an example of processing by a position difference information creation unit in the image correction device according to the first exemplary embodiment of the present invention.
Fig. 8 illustrates an example that the position difference information creation unit of the image correction device according to the first exemplary embodiment divides each image of a reference band and an object band into small regions.
Fig. 9 is a flowchart illustrating another example of processing by the position difference information creation unit in the image correction device according to the first exemplary embodiment of the present invention.
Fig. 10 illustrates an example that the position difference information creation unit of the image correction device according to the first exemplary embodiment divides each image of a reference band and an object band into small regions such that a gap is formed between the small regions.
Fig. 11 is a block diagram illustrating another example of a position difference acquisition unit in the image correction device according to the first exemplary embodiment of the present invention.
Fig. 12 is a flowchart illustrating an example of processing by a corrected multiband image creation unit in the image correction device in a first embodiment according to the claimed invention.
Fig. 13 is a schematic diagram illustrating an overlapping state between a pixel (object pixel) of an object band image and a pixel (corresponding pixel) of a reference band image.
Fig. 14A illustrates mathematical expressions that can be used in the image correction device according to the first exemplary embodiment of the present invention.
Fig. 14B illustrates mathematical expressions that can be used in the image correction device according to the first exemplary embodiment of the present invention.
Fig. 15 illustrates a rectangular whiteboard that is a subject.
Fig. 16 illustrates examples of pixel values of pixels of a G band image in which a whiteboard is imaged.
Fig. 17 illustrates examples of pixel values of pixels of an R band image in which a whiteboard is imaged.
Fig. 18 illustrates an example of an overlapping state between an R band image and a G band image when pixels of the R band are shifted by a position difference (0.5, 0.5).
Fig. 19 illustrates examples of pixel values of pixels of a corrected R band image.
Fig. 20 is a flowchart illustrating another example of processing by a corrected multiband image creation unit configured to use a pixel value ratio as a relationship between pixel values.
Fig. 21 is a flowchart illustrating another example of processing by a corrected multiband image creation unit configured to use a difference between pixel values as a relationship between pixel values.
Fig. 22 is a block diagram illustrating an image correction device according to a second exemplary embodiment of the present invention.

Next, exemplary embodiments of the present invention will be described in detail with reference to the drawings.

### [First Exemplary Embodiment]

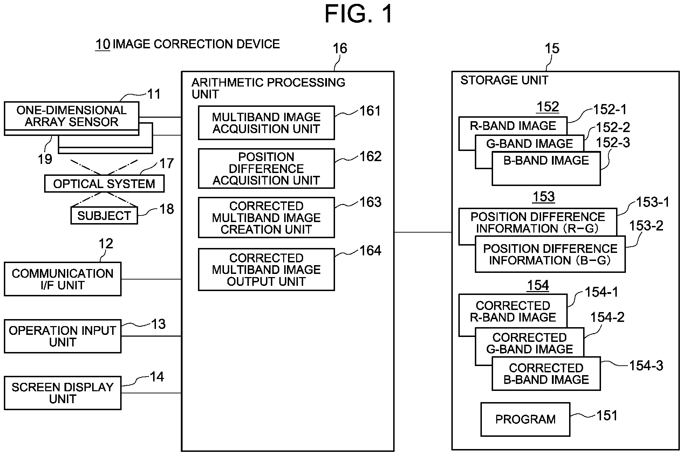

Referring to Fig. 1, an image correction device 10 according to a first exemplary embodiment of the present invention includes a plurality of one-dimensional array sensors 11, a communication interface (I/F) unit 12, an operation input unit 13, a screen display unit 14, a storage unit 15, and an arithmetic processing unit 16.

The one-dimensional array sensors 11 include, for example, a one-dimensional charge-coupled device (CCD) sensor, a one-dimensional complementary MOS (CMOS) sensor, or the like, and constitute a pushbroom-type image acquisition device that images a subject 18. The one-dimensional array sensors 11 are provided with a plurality of filters 19 whose bands that are wavelength bands of light to be transmitted are different. The number of band images and the wavelength bands are determined according to combinations and the number of sets of the one-dimensional array sensors and the filters 19 to be used. For example, in a multiband sensor mounted on ASNARO-1 that is a high-resolution optical satellite, the following six band images are acquires:
Band 1: wavelength band 400-450 nm (Ocean Blue)
Band 2: wavelength band 450-520 nm (Blue)
Band 3: wavelength band 520-600 nm (Green)
Band 4: wavelength band 630-690 nm (Red)
Band 5: wavelength band 705-745 nm (Red Edge)
Band 6: wavelength band 760-860 nm (NIR)

The communication I/F unit 12 is configured of, for example, a dedicated data communication circuit, and is configured to perform data communication with various devices connected via wired or wireless communication. The operation input unit 13 includes operation input devices such as a keyboard and a mouse, and is configured to detect an operation by an operator and output it to the arithmetic processing unit 16. The screen display unit 14 includes a screen display device such as a liquid crystal display (LCD) or a plasma display panel (PDP), and is configured to display, on the screen, a corrected band image and the like in accordance with an instruction from the arithmetic processing unit 16.

The storage unit 15 includes storage devices such as a hard disk and a memory, and is configured to store processing information and a program 151 necessary for various types of processing to be performed in the arithmetic processing unit 16. The program 151 is a program that is read and executed by the arithmetic processing unit 16 to thereby realize various processing units. The program 151 is read, in advance, from an external device (not illustrated) or a storage medium (not illustrated) via a data input and output function such as the communication I/F unit 12, and is stored in the storage unit 15.

The main processing information stored in the storage unit 15 includes a multiband image 152, position difference information 153, and a corrected multiband image 154.

The multiband image 152 is a set of a plurality of band images acquired by a pushbroom-type image acquisition device. The multiband image 152 may be a set of all band images acquired by a pushbroom-type image acquisition device, or a set of some band images. In the present embodiment, the multiband image 152 is assumed to be configured of three bands namely an R-band image 152-1, a G-band image 152-2, and a B-band image 152-3. For example, in the case of ASNARO-1 mentioned above, it is possible to assign a band 4 as the R-band image 152-1, assign a band 3 as the G-band image 152-2, and assign a band 2 as the B-band image 152-3.

In the case where one of the band images constituting the multiband image 152 is a reference band image and the rest of them are object band images, the position difference information 153 is information about the position difference between the reference band image and an object band image. In the present embodiment, it is assumed that the G-band image 152-2 is the reference band image, and the R-band image 152-1 and the B-band image 152-3 are object band images, respectively. Therefore, the position difference information 153 is configured of position difference information 153-1 in which the position difference of R-band image 152-1 relative to the G-band image 152-2 is recorded, and position difference information 153-2 in which the position difference of the B-band image 152-3 relative to the G-band image 152-2 is recorded.

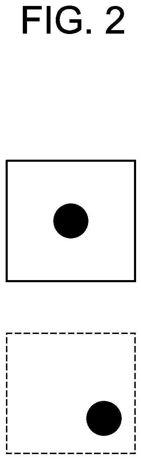

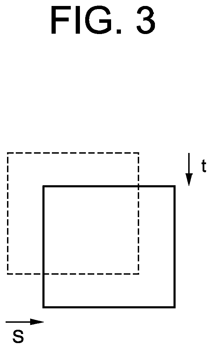

In the case where distortion is caused by the characteristics or the like of the optical system in the pushbroom-type image acquisition device, when the subject 18 is imaged, a phenomenon that the same portion of the subject 18 is imaged at different locations in pixels of the respective bands occurs. Fig. 2 is a schematic diagram for explaining such a phenomenon. In Fig. 2, a solid-line rectangle shows a range imaged in a pixel (x, y) of the reference band image, a broken-line rectangle shows a range imaged in a pixel (x, y) of an object band image, and a black circle represents a part of the subject 18. In the example of Fig. 2, the black circle that is a part of the subject 18 is located at almost the center in the pixel (x, y) of the reference band, while it is located at the lower right in the pixel (x, y) of the object band. In this case, as illustrated in Fig. 3, when the pixel (x, y) of the object band is moved rightward on the sheet by s pixels (0 ≤ s < 1) and moved downward on the sheet by t pixels (0 ≤ s < 1), respectively, the imaging ranges of the pixel (x, y) of the reference band image and the pixel (x, y) of the object band image match. When the imaging ranges of a plurality of band images match in as described above, it is called that pixel boundaries of the band images match. Further, (s, t) at that time is referred to as a position difference. The position difference may differ in each object band and in each pixel. In the present embodiment, the position difference information 153 is recorded for each object band and for each pixel.

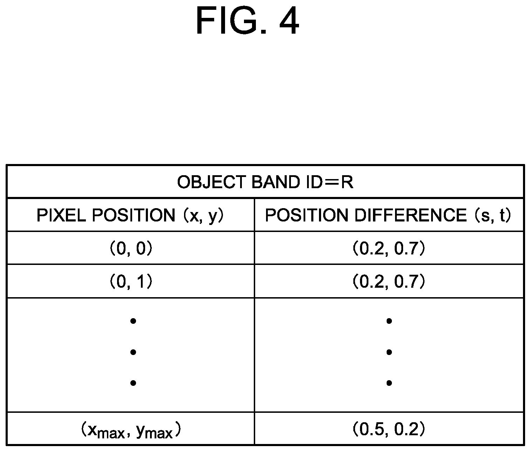

Fig. 4 is a table illustrating an exemplary configuration of the position difference information 153-1 of the R-band image 152-1. The position difference information 153-1 of this example is configured of items of the object band ID and information for each pixel. In the item of object band ID, identification information for uniquely identifying the object band ID is stored. The item of information for each pixel is configured of a combination of an item of a pixel position of the object band image and an item of position difference in the pixel position. In the item of pixel position, xy coordinate values (x, y) specifying the position of the pixel on the object band image is stored. In the item of position difference, (s, t) described with reference to Fig. 3 is stored. Although not illustrated, the position difference information 153-2 of the B-band image 152-3 also has a configuration similar to that of the position difference information 153-1.

The corrected multiband image 154 is a multiband image obtained by applying correction to the multiband image 152 so as not to cause a color shift. The corrected multiband image 154 is configured of a corrected R-band image 154-1, a corrected G-band image 154-2, and a corrected B-band image 154-3.

The arithmetic processing unit 16 has a microprocessor such as an MPU and the peripheral circuits thereof, and is configured to read, from the storage unit 15, and execute the program 151 to allow the hardware and the program 151 to cooperate with each other to thereby realize the various processing units. Main processing units realized by the arithmetic processing unit 16 include a multiband image acquisition unit 161, a position difference acquisition unit 162, a corrected multiband image creation unit 163, and a corrected multiband image output unit 164.

The multiband image acquisition unit 161 is configured to acquire the multiband image 152 from the pushbroom-type image acquisition device configured of the one-dimensional array sensors 11, and store it in the storage unit 15. However, the multiband image acquisition unit 161 is not limited to have the configuration of acquiring the multiband image 152 from the multiband image acquisition unit 161. For example, when the multiband image152 acquired from the image acquisition device is accumulated in an image server device not illustrated, the multiband image acquisition unit 161 may be configured to acquire the multiband image 152 from the image server device.

The position difference acquisition unit 162 is configured to acquire the position difference information 153 of the multiband image 152 acquired by the multiband image acquisition unit 161, and record it in the storage unit 15.

The corrected multiband image creation unit 163 is configured to read the multiband image 152 and the position difference information 153 from the storage unit 15, create the corrected multiband image 154 from the multiband image 152 and the position difference information 153, and record it in the storage unit 15.

The corrected multiband image output unit 164 is configured to read the corrected multiband image 154 from the storage unit 15, display the corrected multiband image 154 on the screen display unit 14, or/ and output it to an external device via the communication I/F unit 12. The corrected multiband image output unit 164 may display or output each of the corrected R-band image 154-1, the corrected G-band image 154-2, and the corrected B-band image 154-3 independently, or display a color image obtained by synthesizing the corrected R-band image 154-1, the corrected G-band image 154-2, and the corrected B-band image 154-3 on the screen display unit 14, or/and output it to an external device via the communication I/F unit 12.

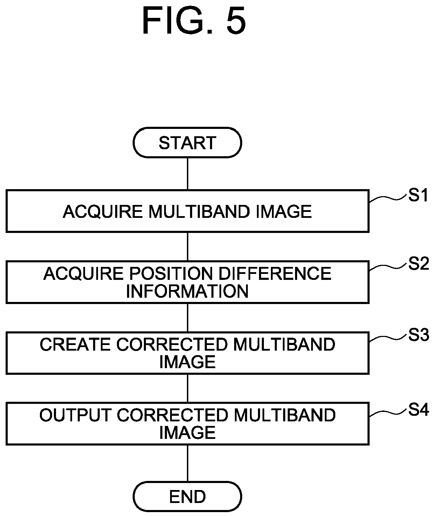

Fig. 5 is a flowchart of an exemplary operation of the image correction device 10 according to the present embodiment. Referring to Fig. 5, first, the multiband image acquisition unit 161 acquires the multiband image 152 imaged by the image acquisition device configured of the one-dimensional array sensors 11, and records it in the storage unit 15 (step S1). Then, the position difference acquisition unit 162 acquires the position difference information 153 of the multiband image 152 acquired by the multiband image acquisition unit 161, and stores it in the storage unit 15 (step S2). Then, the corrected multiband image creation unit 163 reads the multiband image 152 and the position difference information 153 from the storage unit 15, creates the corrected multiband image 154 on the basis thereof, and records it in the storage unit 15 (step S3). Then, the corrected multiband image output unit 164 reads the corrected multiband image 154 from the storage unit 15, displays it on the screen display unit 14, or/and outputs it to an external device via the communication I/F unit 12 (step S4).

Next, main constituent elements of the image correction device 10 will be described in detail. First, the position difference acquisition unit 162 will be described in detail.

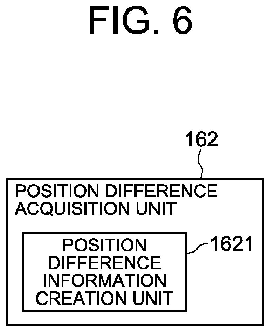

Fig. 6 is a block diagram illustrating an example of the position difference acquisition unit 162. The position difference acquisition unit 162 of this example is configured to include a position difference information creation unit 1621.

The position difference information creation unit 1621 is configured to read the multiband image 152 from the storage unit 15, create the position difference information 153-1 of the R band from the G-band image 152-2 and the R-band image 152-1, and create the position difference information 153-2 of the B band from the G-band image 152-2 and the B-band image 152-3.

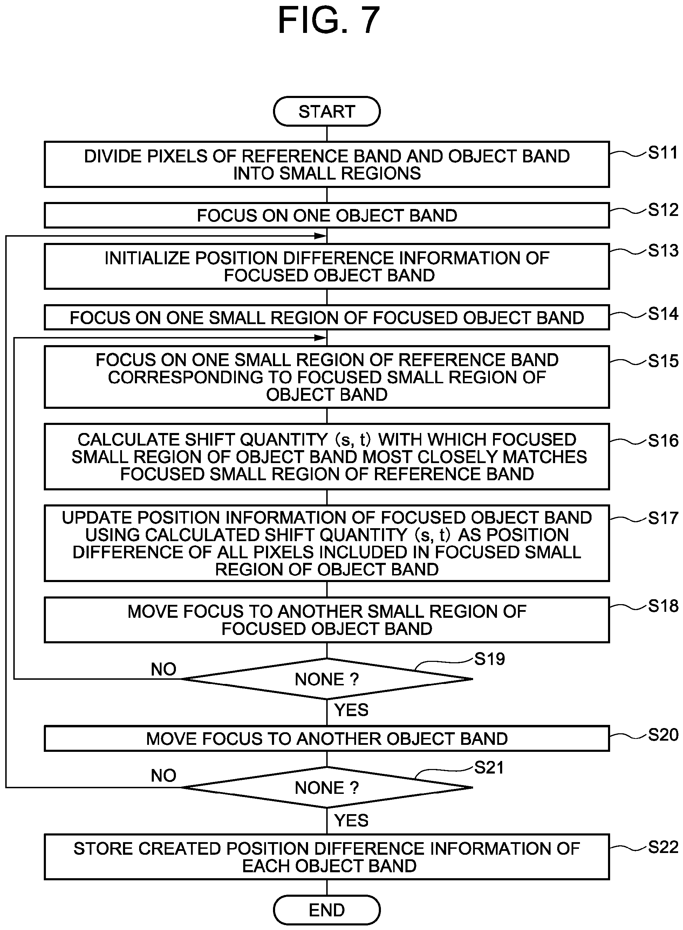

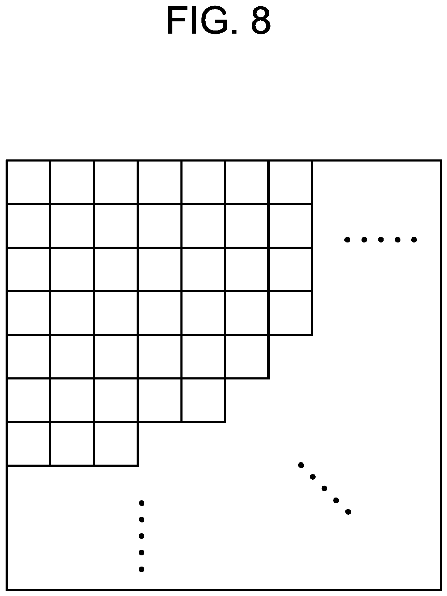

Fig. 7 is a flowchart illustrating an exemplary flow of processing by the position difference information creation unit 1621. First, the position difference information creation unit 1621 divides respective images of the reference band and the object bands into a plurality of small regions each having a predetermined shape and size, as illustrated in Fig. 8, for example (step S11). In Fig. 8, the small region is a rectangle, but it may be in a shape other than rectangle. It is desirable that the size of a small region is sufficiently larger than one pixel.

Then, the position difference information creation unit 1621 focuses on one of the object bands (for example, R band) (step S12). Then, the position difference information creation unit 1621 initializes the position difference information of the focused object band (step S13). For example, when the position difference information of the object band has a format illustrated in Fig. 4, the position difference (s, t) of each pixel position (x, y) is initialized to a NULL value, for example.

Then, the position difference information creation unit 1621 focuses on one small region of the focused object band (step S14). Then, the position difference information creation unit 1621 focuses on one small region of the reference band corresponding to the focused small region of the object band (step S15). In the present embodiment, it is assumed that the position difference of the object band is one pixel or smaller. Therefore, the one small region of the reference band corresponding to the focused small region of the object band is a small region located at the same position as that of the small region of the object band. That is, when the small region of the focused object band is a small region at the upper left corner in Fig. 8, the focused small region in the reference band is also a small region at the upper left corner in Fig. 8.

Then, the position difference information creation unit 1621 calculates the shift quantity (s, t) in which the focused small region of the object band most closely matches the focused small region of the reference band (step S16). For example, in the case where the focused small region of the object band most closely matches the focused small region of the reference band when it is shifted by 0.2 pixels in the X axis direction and 0.7 pixels in the Y axis direction for example, the X-axial shift quantity s = 0.2 pixels and the Y-axial shift quantity t = 0.7 pixels are the obtained shift quantity. Such shift quantity may be calculated by using a subpixel matching method that enables calculation of shift quantity with the accuracy of less than 1 pixel, such as a phase limiting correlation method or an SSD parabola fitting method. Then, the position difference information creation unit 1621 updates the position difference information of the focused object band by using the calculated shift quantity (s, t) as the position difference of every pixel included in the focused small region of the object band (step S 17).

Then, the position difference information creation unit 1621 moves the focus to another small region of the focused object band (step S18), and returns to the processing of step S15 to execute the processing similar to that described above on the newly focused small region of the object band. Then, upon completion of focusing on all small regions in the focused object band (YES at step S19), the position difference information creation unit 1621 moves the focus to one of the other object bands (for example, B band) (step S20), and returns to the processing of step S13 to execute the processing similar to that of the processing described above on the newly focused object band. Then, upon completion of focusing on all object bands (YES at step S21), the position difference information creation unit 1621 stores the created position difference information of the respective object bands in the storage unit (step S22). Then, the position difference information creation unit 1621 ends the processing illustrated in Fig. 7.

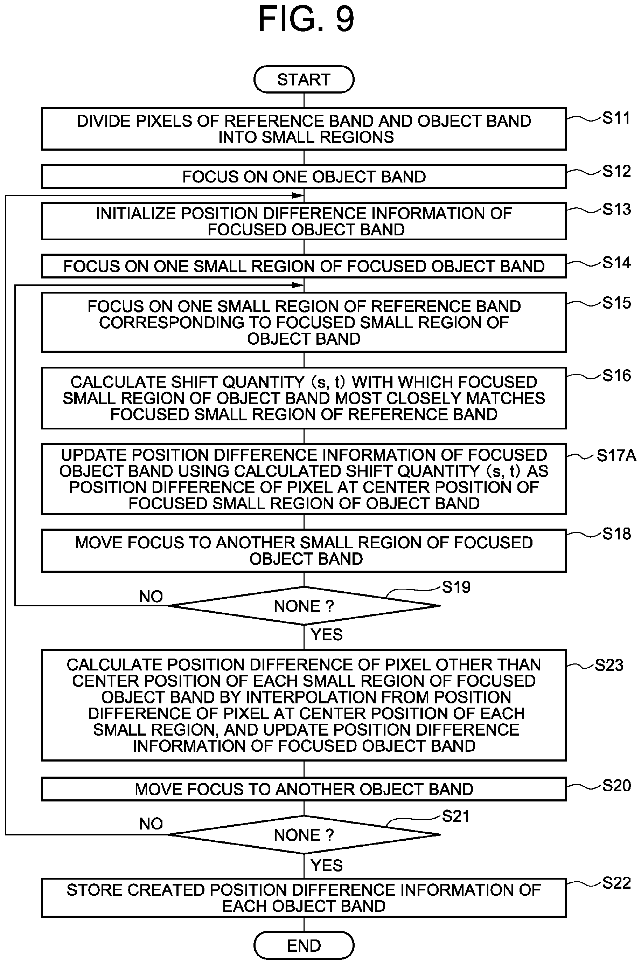

Fig. 9 is a flowchart illustrating another example of processing by the position difference information creation unit 1621. The processing illustrated in Fig. 9 differs from the processing illustrated in Fig. 7 in that step S17 is replaced with step S17A and that new step S23 is provided between step S19 and step S20. The rest are the same as those illustrated in Fig. 7. At step S17A of Fig. 9, the position difference information creation unit 1621 updates the position difference information of the focused object band by using the shift quantity (s, t) calculated at step S16 as a position difference of the pixel at the center position in the focused small region of the object band. Therefore, at step S17A of Fig. 9, the position difference of the pixels other than the pixel at the center position in the focused small region is not updated, and the NULL value that is the initial value remains. At step S23 of Fig. 9, the position difference information creation unit 1621 calculates the position difference of the pixels other than the pixel at the center position in each small region of the focused object band, by interpolation from the position difference of the pixel at the center position in each small region calculated at step 17A, and updates the position difference information of the focused object band. The interpolation method may be interpolation by a weighted average according to the distance from the center of an adjacent small region, for example.

When the shift quantity calculated for each small region is used as the position difference of all pixels in the small region as illustrated in Fig. 7, the position difference may not continue at the boundary of small regions. Meanwhile, in the method illustrated in Fig. 9, position difference changes continuously according to the pixel positions, which can prevent discontinuous position difference. Consequently, the method illustrated in Fig. 9 has an effect of preventing generation of a level difference in the color of the corrected image at the boundary of small regions.

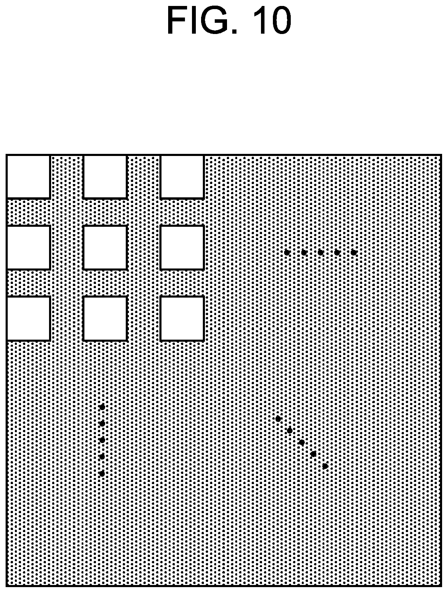

Further, in the method illustrated in Figs. 7 and 9, the entire images of the reference band and the object band are thoroughly divided into small regions. However, as illustrated in Fig. 10, the position difference information creation unit 1621 may divide them such that there is a gap (hatched portion in the figure) between small regions. Then, the position difference information creation unit 1621 may obtain the position difference of a pixel included in the gap by interpolation from the position difference of the pixel at the center position calculated at step S17 or S 17A. The interpolation in that case may be interpolation by a weighted average according to the distance from the center of the adjacent small region, for example. According to the method of creating the position difference by dividing the reference band and the object bands into small regions so as to have a gap between small regions as described above, the calculation time can be reduced compared with the case of dividing them so as to not to have any gap.

In the method illustrated in Fig. 7 and 9, the position difference information creation unit 1621 creates the position difference of each pixel of the object band image from the multiband image 152. However, the position difference information creation unit 1621 may create the position difference of each pixel of the object band image from the position and posture information of the platform (artificial satellite or aircraft) that acquires the multiband image. In general, an image captured from an artificial satellite or an aircraft is projected to a map by using the position, posture, and the like of the platform at the time of acquiring the image to thereby be processed into an image product. In the case of a multispectral image, since it is projected to a map for each band, position difference information is also obtained in the process of map projection. Therefore, the position difference information creation unit 1621 may create the position difference information of each pixel of the object band image by using a general map projection method.

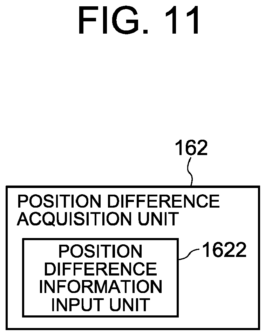

Fig. 11 is a block diagram illustrating another example of the position difference acquisition unit 162. The position difference acquisition unit 162 of this example is configured to include a position difference information input unit 1622.

The position difference information input unit 1622 is configured to input the position difference information 153 therein from an external device not illustrated via the communication I/F unit 12, and store it in the storage unit 15. Alternatively, the position difference information input unit 1622 is configured to input therein the position difference information 153 from an operator of the image correction device 10 via the operation input unit 13, and store it in the storage unit 15. That is, the position difference information input unit 1622 is configured to input therein the position difference information 153 of the multiband image 152 calculated by a device other than the image correction device 10, and store it in the storage unit 15.

As described above, the position difference acquisition unit 162 is configured to create by itself the position difference information 153 of the multiband image 152, or input it therein from the outside, and store it in the storage unit 15.

Next, the corrected multiband image creation unit 163 will be described in detail.

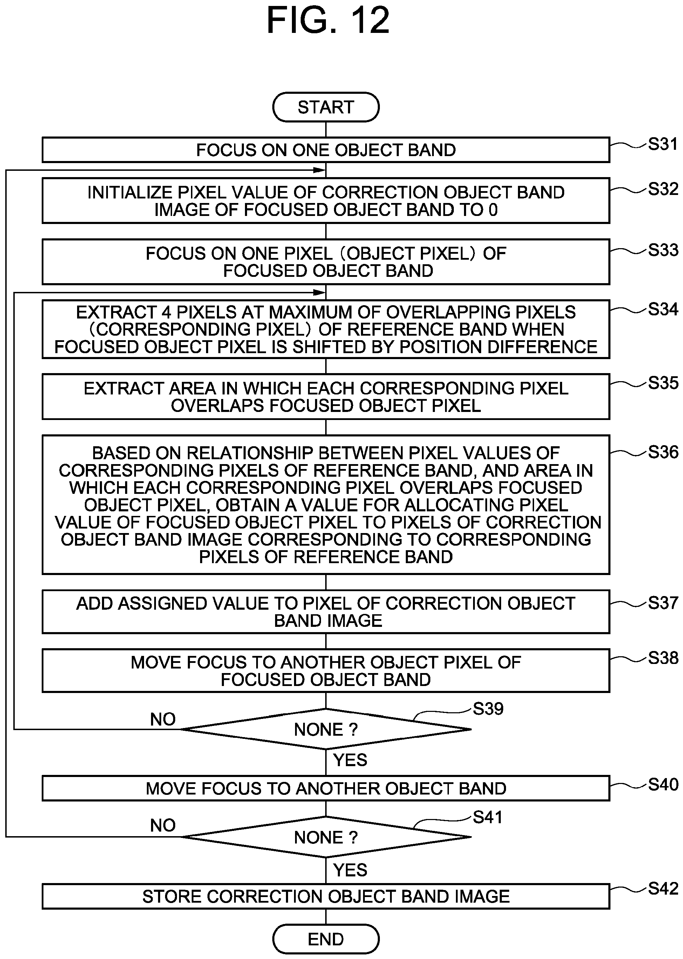

Fig. 12 is a flowchart illustrating an exemplary flow of processing by the corrected multiband image creation unit 163 in an embodiment according to the claimed invention. Referring to Fig. 12, the corrected multiband image creation unit 163 first focuses on one of the object bands (for example, R band) (step S31). Then, the corrected multiband image creation unit 163 initializes the pixel value of the correction object band image of the focused object band to zero (step S32). The correction object band image of the object band means an image that holds the color pixel value of the object band at each pixel position of the reference band. Accordingly, the pixel position (x, y) of the correction object band image corresponds to the pixel position (x, y) of the reference band image.

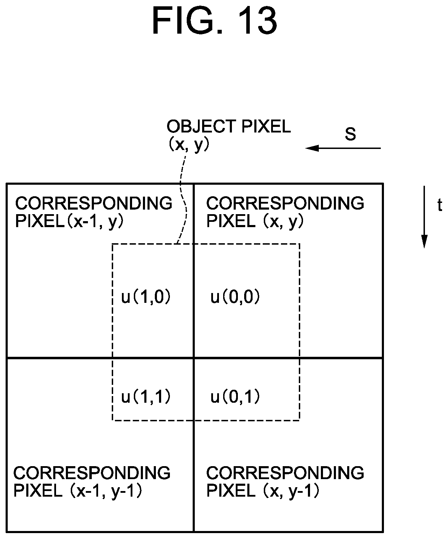

Then, the corrected multiband image creation unit 163 focuses on a pixel at one pixel position of the focused object band (step S33). The pixel at the pixel position of the focused object band is referred to as an object pixel. Then, the corrected multiband image creation unit 163 extracts four pixels at maximum at the pixel position of the reference band that overlaps when the focused object pixel is shifted by the position difference (s, t) of the object pixel (step S34). The pixel of the reference band that overlaps this object pixel is referred to as a corresponding pixel. Here, "s" and "t" at the position difference (s, t) of each pixel of the object band is zero or larger and less than one pixel, and it is assumed that there is no position difference that is integral multiple of the pixel. Then, when both "s" and "t" are not zero, the object pixel at the pixel position (x, y) of the focused object band overlaps four pixels of the reference band, that is, four corresponding pixels at the pixel positions (x, y), (x-1, y), (x, y-1), and (x-1, y-1). Fig. 13 is a schematic diagram illustrating such an overlapping state, in which solid-line rectangles show corresponding pixels of the reference band, and a broken-line rectangle shows the object pixel of the object band. Further, when either "s" or "t" is zero, the object pixel at the pixel position (x, y) of the focused object band overlaps two pixels of the reference band, and when both "s" and "t" are zero, the object pixel at the pixel position (x, y) of the focused object band overlaps one pixel of the reference band. As described above, when either "s" or "t" or both "s" and "t" are zero, the number of corresponding pixels is not four. However, regarding a corresponding pixel not overlapping the object pixel, since the area overlapping the object pixel is zero, there is no effect in handing it similarly to the corresponding pixel overlapping the object pixel. Therefore, in the below description, the case where either "s" or "t" is zero or the case where both "s" and "t" are zero are handled without distinction in expressions.

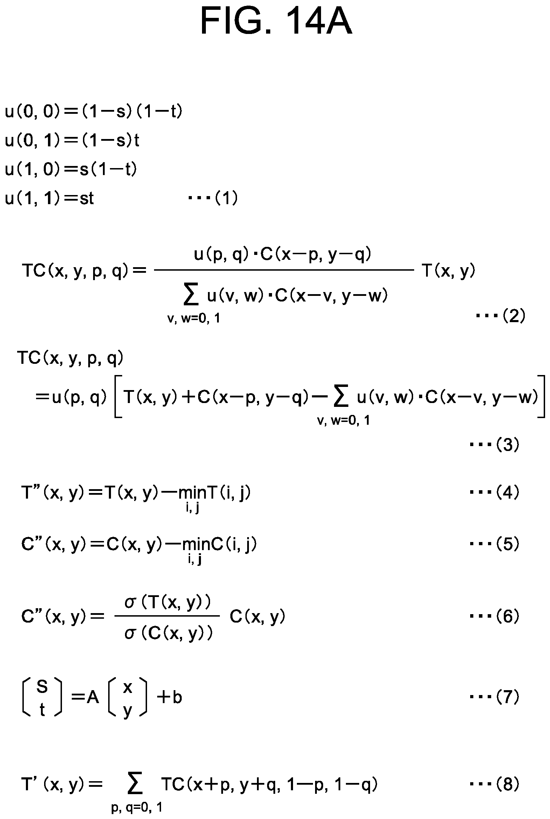

Then, the corrected multiband image creation unit 163 obtains the area in which the object pixel of the focused object band overlaps corresponding pixels of the reference band (step S35). Assuming that the areas where the object pixel at the pixel position (x, y) overlaps the corresponding pixels at the pixel positions (x, y), (x, y-1), (x-1, y), and (x-1, y-1) are u(0, 0), u(0, 1), u(1, 0), and u(1, 1), the areas thereof are given by Expression 1 shown in Fig. 14A using "s" and "t".

Then, on the basis of the relationship between the pixel values of the corresponding pixels of the reference band and the area that each of the corresponding pixels overlaps the focused object pixel, from the pixel value of the focused object pixel, the corrected multiband image creation unit 163 obtains a value to be allocated to a plurality of pixels of the correction object band image corresponding to the corresponding pixels of the reference band (step S36). That is, by focusing on the fact that luminance values or brightness has a high correlation between bands, the corrected multiband image creation unit 163 allocates the pixel value of the object pixel of the focused object band to a plurality of pixels of the correction object band image corresponding to the corresponding pixels of the reference band so as to have the same relationship as that between the pixel values of the corresponding pixels of the reference band.

An example of a relationship between pixels that can be used in the present invention is a ratio of pixel values. Instead of a ratio of pixel values, a difference between pixel values can also be used. In the case of using a ratio of pixel values, at step S36, the corrected multiband image creation unit 163 calculates a value to be allocated to a plurality of pixels of the correction object band image according to Expression 2 of Fig. 14A. In the case of using a difference between pixel values, at step S36, the corrected multiband image creation unit 163 calculates a value to be allocated to a plurality of pixels of the correction object band image according to Expression 3 of Fig. 14A. In Expression 2 and Expression 3, T(x, y) represents a pixel value of an object pixel at the pixel position (x, y) of the focused object band, C(x-p, y-q)(p, q=0, 1) represents a pixel value of a corresponding pixel of the reference band, u(p, q) represents the area of a region where the object pixel described with reference to Fig. 13 and the corresponding pixel of the reference band overlap with each other, and TC(x, y, p, q) represents a value allocated to a pixel value T'(x-p, y-q)(p, q=0, 1) of the corresponding pixel (x-p, y-q)(p, q=0, 1) of the corrected band image.

As a relationship between pixel values, whether to use a ratio of the pixel values or use a difference between the pixel values may be determined arbitrarily. For example, in the environment where a condition that the brightness ratio is the same between the corresponding pixels of the object band and the reference band is established, the ratio of pixel values may be used. That is, in order to enable comparison of the brightness ratio, if the pixel value 0 serving as the reference is in a state of not applied with light so that it is in an environment where a pixel value is determined in comparison with the brightness entering each band, the ratio of pixel values may be used. However, in an image obtained by capturing the ground from an artificial satellite particularly, not only light reflected at the ground surface that is a desirable signal but also light scattered in the atmosphere also enters the sensor. Therefore, the pixel value becomes larger by the light scattered in the atmosphere. In the light scattered in the atmosphere, since a shorter wavelength has a larger value, how the pixel value becomes larger differs according to the band. Therefore, in an image capturing the ground from an artificial satellite, the ratio of pixel values may not show the brightness ratio. Accordingly, in such an environment, it is preferable to use a difference between pixel values as the relationship between the pixel values. This is because the difference between pixel values is not changed even if a certain quantity of pixel value of each band is added. By using the difference between pixel values, with respect to an image capturing the ground from an artificial satellite, it is possible to remove the effect of adding the output by the light scattered in the atmosphere or the like. Therefore, by using the difference between pixel values, even if the ratio of pixel values does not show the brightness ratio, it is possible to create a corrected image without any color shift.

Referring to Fig. 12 again, the corrected multiband image creation unit 163 adds a value to be allocated to a plurality of pixels of the correction object band image obtained at step S36, to the pixel value (initial value is zero) of the pixels of the correction object band image (step S37). That is, assuming that a pixel value of a pixel (x, y,), whose phase is matched with that of the reference band, of the correction object band image is T'(x, y), T'(x, y) is calculated from Expression 8 in Fig. 14A.

Then, the corrected multiband image creation unit 163 moves the focus to one object pixel at another pixel position of the focused object band (step S38), returns to step S34 through step S39 to repeat processing similar to the processing described above. Then, upon completion of focusing on all pixels in the focused object band (YES at step S39), the corrected multiband image creation unit 163 moves the focus to one of the other object bands (for example, B band) (step S40), and returns to step S32 through step S41 to repeat processing similar to the processing described above. Then, upon completion of focusing on all object bands (YES at step S41), the corrected multiband image creation unit 163 stores the correction object band image in the storage unit 15 (step S42). That is, the corrected multiband image creation unit 163 writes the corrected R-band image 154-1 and the corrected B-band image 154-3, created as described above, in the storage unit 15. The corrected multiband image creation unit 163 also writes the G-band image 152-2 that is the reference band in the storage unit 15 as it is as the corrected G-band image 154-2. Then, the corrected multiband image creation unit 163 ends the processing illustrated in Fig. 12.

As described above, according to the image correction device 10 of the present embodiment, it is possible to reduce a color shift caused by a phase difference. This is because, by using one of a plurality of band images obtained by capturing a subject as a reference band and using at least one of the rest as an object band image, the image correction device 10 acquires a position difference between the object band image and the reference band image, and on the basis of the relationship between pixel values of a plurality of pixels of the reference band image overlapping the pixel of the object band image when the pixel of the object band image is shifted by the position difference, creates a corrected band image that holds the pixel value of light on the object band image at the pixel position of the reference band image. The effect described above will be explained below with a simple example.

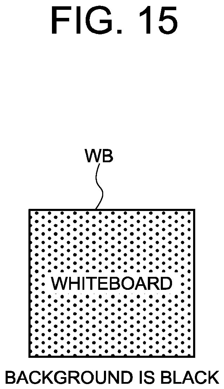

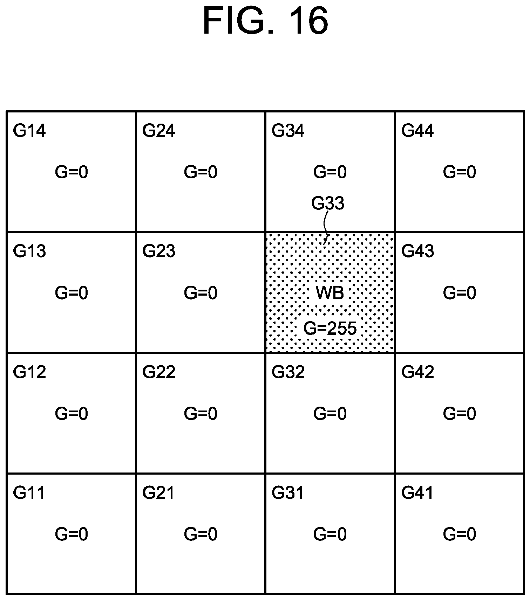

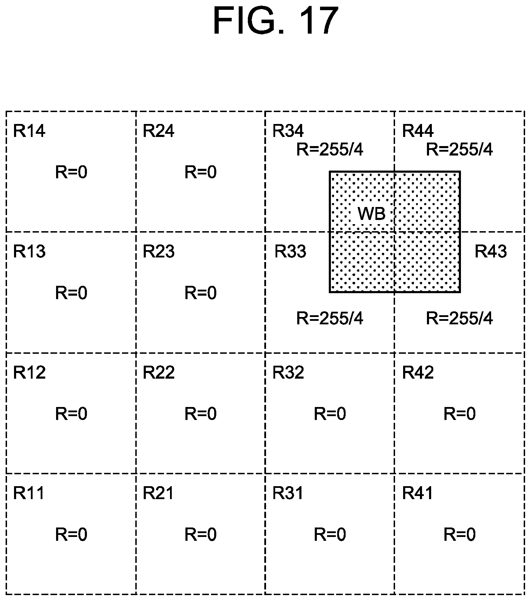

Here, a rectangular whiteboard WB as illustrated in Fig. 15 is considered as a subject 18. The background of the whiteboard WB is assumed to be black. It is assumed that a band image is configured of 4 by 4 pixels, and that the pixel value of each pixel ranges from 0 to 255. Fig. 16 illustrates examples of pixel values of pixels G11 to G44 of a G band image in which the whiteboard WB is imaged. In the example, the whiteboard WB is imaged only in the pixel G33 of the G band. The pixel value of the pixel G33 is 255, and the pixel value of the other pixels is 0. Fig. 17 illustrates examples of pixel values of pixels R11 to R44 of an R band image in which the whiteboard WB is imaged. In the example, the whiteboard WB is imaged in the pixels R34, R44, R33, and R43 of the R band. The pixel value of each of these pixels is 255/4, and the pixel value of the other pixels is 0. Here, the position difference (s, t) of each of the pixels R34, R44, R33, and R43 of the R band is assumed to be (0.5, 0.5).

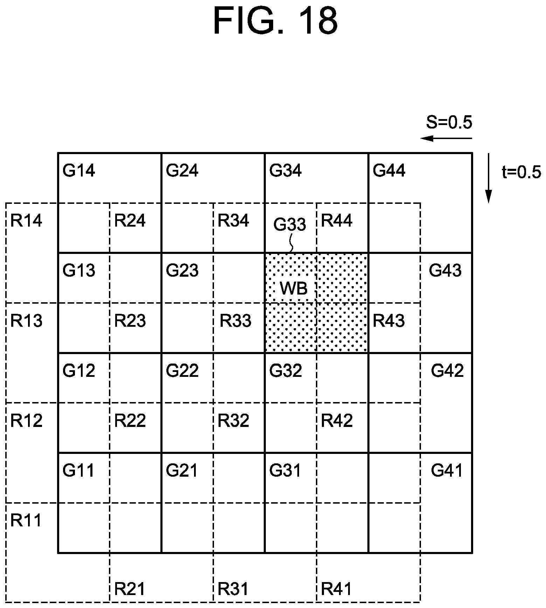

Fig. 18 illustrates an example of an overlapping state between the R band image and the G band image when the pixels R34, R44, R33, and R43 of the R band are shifted by the position difference (0.5, 0.5), respectively. In the example, the pixel R34 of the R band overlaps four pixels G24, G34, G23, and G33 of the G band image. Further, the pixel R44 of the R band overlaps four pixels G34, G34, G33, and G43 of the G band image. Further, the pixel R33 of the R band overlaps four pixels G23, G33, G22, and G32 of the G band image. Further, the pixel R43 of the R band overlaps four pixels G33, G43, G32, and G42 of the G band image.

In the case of the examples as described above, the pixel value of a pixel R33' of the corrected R-band image corresponding to the pixel G33 is given as the sum of the pixel value allocated from the pixel R34 to the pixel R33, the pixel value allocated from the pixel R34 to the pixel R33', the pixel value allocated from the pixel R44 to the pixel R33', and the pixel value allocated from the pixel R43 to the pixel R33'.

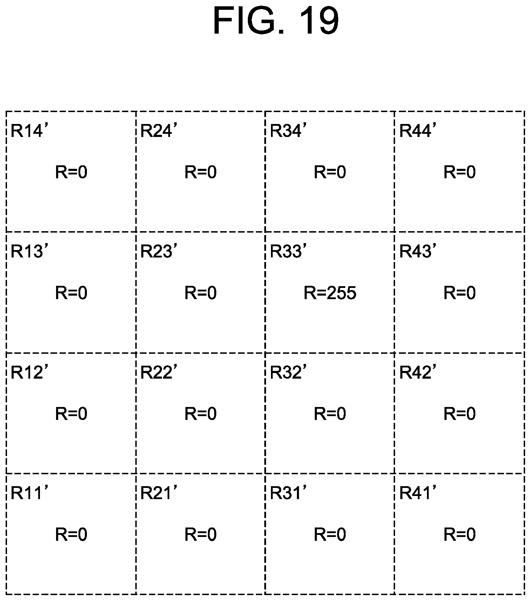

According to Expression 2, the pixel value allocated from the pixel R34 to the pixel R33' is 255/4. That is, the entire pixel value of the pixel R34 is assigned to the pixel R33'. This is because since the relationship among the pixel values of the four pixels G24, G34, G23, and G33 overlapping the pixel R34 is 0:0:0:254 in the case of a pixel value ratio, when the pixel R34 is allocated to pixels R24', R34', R23' and R33' so as to have a similar pixel value ratio, 0:0:0:254/4 is obtained. Similarly, the entire pixel value of the pixel R44 is allocated to the pixel R33', the entire pixel value of the pixel R33 is allocated to the pixel R33', and the entire pixel value of the pixel R43 is allocated to the pixel R33'. As a result, the pixel value of the of the pixel R33' of the corrected R-band image becomes 255 as illustrated in Fig. 19. This is the case of Expression 2 using the ratio of pixel values as a relationship between pixel values. Similarly, in the case of Expression 3 using a difference between pixels, the entire pixel values of the pixels R34, R44, R33, and R43 are allocated to the pixel R33', and the pixel value of the pixel R33' of the corrected R-band image becomes 255.

On the other hand, since the entire pixel values of the pixels R34, R44, R33, and R43 are allocated to the pixel R33', the pixel value allocated from the pixels R34, R44, R33, and R43 to the pixels of the corrected R-band image other than the pixel R44' is 0. As a result, the pixel value of the pixels other than the pixel R33' of the corrected R-band image becomes 0, as illustrated in Fig. 19. Consequently, a color shift never occurs even when the G band image and the corrected R-band image are synthesized.

On the other hand, in the case of obtaining the pixel value of each pixel of the corrected R-band image corresponding to each pixel position of the G-band image in Fig. 18 with use of a general interpolation formula from each pixel value of the R-band image after the shift illustrated in Fig. 18, a corrected R-band image in which the pixel value of the R band is allocated to the pixels in a certain range around the pixel R33' (for example, pixels R24', R34', R44', R23', R33', R43', R22', R32', and R42') is obtained. As a result, when the G band image and the corrected R-band image are synthesized, the whiteboard WB is shown as an image of a board in which the outer side is red and the center is green. That is, a color shift occurs.

The color shift correction effect in the present embodiment has been described above using a corrected R-band image as an example. A color shift in a corrected B-band image can also be reduced similarly. Further, while an effect of correcting a color shift has been described using a whiteboard as an example, a similar effect can be achieved for a subject of another type, of course. Note that in the case of an oblique white line on the black background, in the color shift correction by a general interpolation method, if the position where the end of the oblique white line is located in a pixel differs by the band, a color shift occurs in which red is emphasized at positions on both sides of the white line and blue or green in emphasized at another position. According to the present invention, such a color shift can also be reduced.

The configuration, operation, and effects of the image correction device 10 according to the first exemplary embodiment has been described above. Next, some modifications of the first exemplary embodiment will be described.

### <Modification 1>

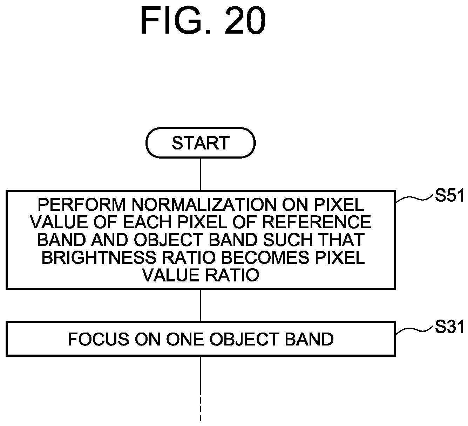

Fig. 20 is a flowchart illustrating another example of processing by the corrected multiband image creation unit 163 configured to use a ratio of pixel values as a relationship between pixel values. Referring to Fig. 20, when the corrected multiband image creation unit 163 starts processing of Fig. 20, the corrected multiband image creation unit 163 performs normalization to allow the brightness ratio to be the pixel value ratio, on the pixel values of the respective pixels of the G-band image 152-2 that is the reference band image and the R-band image 152-1 and the B-band image 152-3 that are object band images (step S51). Then, the corrected multiband image creation unit 163 uses the normalized pixel values of the reference band and the object bands to perform processing of steps S31 to S42 illustrated in Fig. 12.

Using the ratio of pixel values as a relationship between the pixel values of the pixels of the corresponding pixels is based on the premise that the ratio of pixel values matches the brightness ratio. However, when a state of no light does not have a pixel value 0 due to entering of light caused by scattering of the atmosphere or the like and the offset of the scattering of the atmosphere is added for example, the ratio of pixel values in the reference band image and the object band images does not exactly match the brightness ratio. Therefore, when color shift correction is performed by using the original reference band image and object band images without being normalized, the pixel values of the corrected object band are not based on the ratio of pixel values of the reference band.

Therefore, the corrected multiband image creation unit 163 normalizes the pixel values in order to allow correction to be performed correctly by using the pixel value ratio, even if the offset is added to the multiband image acquired by the multiband image acquisition unit 161. In this example, the corrected multiband image creation unit 163 assumes that there is a pixel on which light is not made incident anywhere in the image, and performs normalization while considering the minimum value of each band image as an offset component of the case where no light is made incident.

First, the corrected multiband image creation unit 163 uses the minimum value of the pixel value of the object band to normalize the pixel value of the object band, as shown in Expression 4 of Fig. 14A. In Expression 4, T(x, y) represents the pixel value at a pixel position (x, y) of an object band acquired by the multiband image acquisition unit 161, minT(i, j) represents a minimum value of the pixel value of the object band, and T"(x, y) represents a normalized pixel value of the object band. As described above, the corrected multiband image creation unit 163 normalizes the R-band image with use of a minimum pixel value in the R-band image, and normalizes the B-band image with use of a minimum pixel value in the B-band image.

Further, the corrected multiband image creation unit 163 uses the minimum value of the pixel value of the reference band to normalize the pixel value of the reference band, as shown in Expression 5 of Fig. 14A. In Expression 5, C(x, y) represents the pixel value at a pixel position (x, y) of the reference band acquired by the multiband image acquisition unit 161, a minC(i, j) represents a minimum value of the pixel value of the reference band, and C"(x, y) represents a normalized pixel value of the reference band. As described above, the corrected multiband image creation unit 163 normalizes the G-band image by using the minimum pixel value in the G-band image.

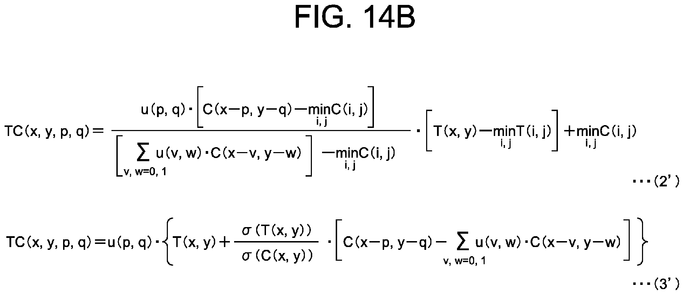

The corrected multiband image creation unit 163 performs processing of step S31 and after in Fig. 12, by using the R-band image, the G-band image, and the B-band image that are normalized as described above, instead of the R-band image 152-1, the G-band image 152-2, and the B-band image 152-3. At that time, the corrected multiband image creation unit 163 uses Expression 2' shown in Fig. 14B for example, instead of Expression 2 in Fig. 14A. Note that the last term on the right side of Expression 2' is a correction term for preventing the absolute value of the pixel value of the object band from being relatively changed from that of before correction. The correction term may be omitted.

### <Modification 2>

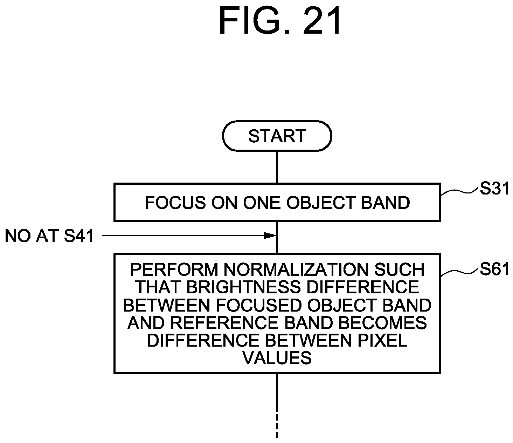

Fig. 21 is a flowchart illustrating another example of processing by the corrected multiband image creation unit 163 configured to use a difference between pixel values as a relationship between pixel values. Referring to Fig. 21, when starting the processing of Fig. 21, the corrected multiband image creation unit 163 focuses on one of the object bands (for example, R band) similar to Fig. 12 (step S31). Then, the corrected multiband image creation unit 163 performs normalization so that the brightness difference between the focused object band and the reference band becomes the difference between the pixel values (step S61). Then, the corrected multiband image creation unit 163 uses the normalized pixel values of the reference band and the object bands to perform processing of steps S32 and after illustrated in Fig. 12. Note that in the case of NO determination at step S41 illustrated in Fig. 12, the corrected multiband image creation unit 163 returns to step S61 and repeats processing similar to the processing described above.

Using the difference between pixel values as a relationship between the pixel values of the pixels of the corresponding pixels is based on the premise that the difference in the pixel values matches the brightness difference. However, there is a case where a difference between the values may differ depending on the bands even through the brightness difference is the same, due to the face that sensitivity is different between bands or the like, for example. In that case, since the difference between pixel values does not exactly match the brightness difference, when color shift correction is performed by using the original reference band image and object band images without being normalized, the pixel values of the corrected object band are not based on the difference between pixel values of the reference band.

Therefore, the corrected multiband image creation unit 163 normalizes the pixel values in order to allow correction to be performed correctly using the difference of the pixel value, even when there is a difference in sensitivity between the bands of the multiband image acquired by the multiband image acquisition unit 161. At step S61, the corrected multiband image creation unit 163 calculates the normalized pixel value of the reference band by using Expression 6 of Fig. 14A. In Expression 6, C(x, y) represents a pixel value of the G-band image before normalization, σ(C(x, y)) represents the standard deviation of the pixel value of the reference band, σ(T(x, y)) represents the standard deviation of the pixel value of the object band, and C"(x, y) represents a normalized pixel value of the reference band.

According to Expression 6, since distribution (standard deviation) of the normalized pixel values of the reference band becomes the same as distribution (standard deviation) of the pixel values of the object band, contrast of the reference band and that of the object band can be matched. Since the contrasts are matched, sensitivity to a change in brightness can be matched between the reference band and the object band. The corrected multiband image creation unit 163 performs processing of step S32 and after in Fig, 12, by using the G-band image normalized as described above, instead of the G-band image 152-2. At that time, the corrected multiband image creation unit 163 uses Expression 3' shown in Fig. 14B for example, instead of Expression 3 in Fig. 14A.

In the above description, the pixel values of the reference band are corrected whereby the sensitivity to a change in the brightness is made the same between the reference band and the object band. However, it is possible to make the sensitivity to a change in the brightness the same between the reference band and the object band by correcting the pixel values of the object band.

### <Modification 3>

In the example illustrated in Fig. 4, the position difference information 153 is recorded in a list of sets of the pixel position and the position difference of each pixel of the object band image. However, the recording method of the position difference information 153 is not limited to that described above. For example, the position difference information 153 may be recorded in such a manner that the object band image is divided into a plurality of sub regions consisting of a plurality of pixels having the same position difference, and the position difference information 153 is recorded as a list of sets of a pixel position and a position difference of each sub region. The shape of a sub region may be a rectangle for example. Further, the pixel position of a sub region may be a set of pixel positions of an upper left pixel and a lower right pixel if it is a rectangle. Further, if the position differences of all pixels of the object band image are almost the same, only one position difference may be recorded.

Moreover, the position difference information 153 may be recorded as a mathematical expression or a coefficient of a mathematical expression, instead of being recorded as numerical information. For example, when the position difference is caused by optical bending, the position difference is determined by the positional relationship between the object band and the reference band on the focus surface or optical characteristics. Therefore, a pixel difference for each pixel can be expressed by an expression defined by optical characteristics using the pixel position as an argument. Accordingly, such an expression or a coefficient thereof may be recorded as the position difference information 153. A position difference of each pixel can be calculated from the aforementioned expression.

Further, the position difference acquisition unit 162 may, for each object band, calculate an approximate plane from the calculated position difference of each pixel position, and record an expression representing the calculated approximate plane or a coefficient thereof as the position difference information 153. For example, when each pixel of the object band is three-dimensional point group data consisting of three-dimensional data (x, y, (s, t)) of a position difference (s, t), for example, the approximate plane may be a plane in which the sum of the square distance from the point group becomes minimum. For example, in the case of using a plane given by Expression 7 of Fig. 14A as an approximate plane, the position difference acquisition unit 162 calculates a matrix A and a vector b that fit best by using the calculated position difference of each pixel position, to thereby able to obtain an expression representing the position difference information 153 of all pixels. While a coefficient of Expression 7 is obtained by using the position difference of each pixel position of the object band in the above description, it is possible to obtain the matrix A and the vector b that fit best by using the position difference of a pixel at the center position of each sub region described with reference to Fig. 7.

### <Modification 4>

In the above description, three band images of RGB are used as the multiband image 152. However, the multiband image 152 may be one other than that. For example, the multiband image 152 may be a four band image including three bands of RGB and a near infrared band. As described above, the number of bands of the multiband image 152 is not limited, and any number of bands having any wavelength bands may be used.

### <Modification 5>

In the above description, it is described that the position difference (s, t) between the pixel (x, y) of the object band and the pixel (x, y) of the reference band at the same pixel position is 0 or larger and less than 1. However, the position difference (s, t) may be less than 0 or 1 or larger. With respect to any position difference (s, t), it is assumed that s' = s-s0, t' = t-t0 are established, where s0 represents a maximum integer not exceeding s, and t0 represents a maximum integer not exceeding t. Then, with respect to the pixel (x, y) of the reference band, when x' = x-s0, y' = y-t0, the position difference between the pixel (x, y) of the object band and the pixel (x', y') of the reference band becomes (s', t') that is 0 or larger and less than 1. Therefore, by replacing the pixel (x, y) of the reference band with the pixel (x', y'), and replacing the position difference (s, t) with the position difference (s', t'), it is possible to obtain the pixel value of the corrected band image by the processing that is same as the above-described processing.

### <Second Exemplary Embodiment>

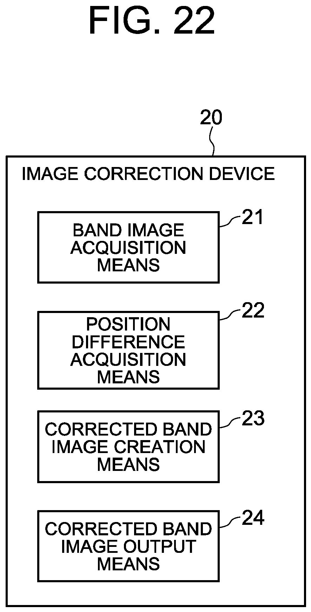

Fig. 22 is a block diagram illustrating an image correction device 20 according to a second exemplary embodiment of the present invention. Referring to Fig. 22, the image correction device 20 is configured to include a band image acquisition means 21, a position difference acquisition means 22, a corrected band image creation means 23, and a corrected band image output means 24.

The band image acquisition means 21 is configured to acquire a plurality of band images obtained by capturing a subject. The band image acquisition means 21 may be configured similarly to the multiband image acquisition unit 161 of Fig. 1 for example, but is not limited thereto.

The position difference acquisition means 22 is configured to, by using one of the plurality of band images acquired by the band image acquisition means 21 as a reference band image and using at least one of the rest as an object band image, acquire a position difference between the object band image and the reference band image acquired by the band image acquisition means 21. The position difference acquisition means 22 may be configured similarly to the position difference acquisition unit of Fig. 1 for example, but is not limited thereto.

The corrected band image creation means 23 is configured to, by using a pixel of the object band image as an object pixel and using each of a plurality of pixels of the reference band image that overlap the object pixel when the object pixel is shifted by the position difference acquired by the position difference acquisition means 22 as a corresponding pixel, create a corrected band image that holds a pixel value of light on the object band image at the pixel position of the reference band image on the basis of the relationship between pixel values of the corresponding pixels. The corrected band image creation means 23 may be configured similarly to the corrected multiband image creation unit 163 of Fig. 1 for example, but is not limited thereto.

The corrected band image output means 42 is configured to output a corrected band image created by the corrected band image creation means 23. The corrected band image output means 24 may be configured similarly to the corrected multiband image output unit 164 of Fig. 1 for example, but is not limited thereto.

The image correction device 20 configured as described above operates as described below. First, the band image acquisition means 21 acquires a plurality of band images obtained by capturing a subject. Then, by using one of the plurality of band images acquired by the band image acquisition means 21 as a reference band image and using at least one of the rest as an object band image, the position difference acquisition means 22 acquires a position difference between the object band image and the reference band image acquired by the band image acquisition means 21. Then, by using a pixel of the object band image as an object pixel and each of a plurality of pixels of the reference band image that overlap the object pixel when the object pixel is shifted by the position difference acquired by the position difference acquisition means 22 as a corresponding pixel, the corrected band image creation means 23 creates a corrected band image that holds a pixel value of light on the object band image at the pixel position of the reference band image on the basis of the relationship between pixel values of the corresponding pixels. Then, the corrected band image output means 42 outputs the corrected band image created by the corrected band image creation means 23.

According to the image correction device 10 that is configured and operates as described above, it is possible to reduce a color shift caused by a phase difference. This is because, by using one of a plurality of band images obtained by capturing a subject as a reference band and using at least one of the rest as an object band image, the image correction device 20 acquires a position difference between the object band image and the reference band image, and by using a pixel of the object band image as an object pixel and each of a plurality of pixels of the reference band image overlapping the object image when the object pixel is shifted by the position difference, the image correction device 20 creates a corrected band image that holds the pixel value of light on the object band image at the pixel position of the reference band image, on the basis of the relationship between the pixel values of the plurality of corresponding pixels.

While the present invention has been described with reference to the exemplary embodiments described above, the present invention is not limited to the above-described embodiments. The form and details of the present invention can be changed in various manners that can be understood by those skilled in the art.

The present invention can be used as an image correction device, an image correction method, and an image correction program that enable a multiband image (multispectral image) to be corrected to an image in which no color shift is generated. The present invention can also be used to correct a color shift caused in image geometric projection such as projection of an image obtained by imaging the ground from a satellite or an aircraft onto a map.
- 10: image correction device
- 11: one-dimensional array sensor
- 12: communication I/F unit
- 13: operation input unit
- 14: screen display unit
- 15: storage unit
- 16: arithmetic processing unit
- 17: optical system
- 18: subject
- 20: image correction device
- 21: band image acquisition means
- 22: position difference acquisition means
- 23: corrected band image creation means
- 24: corrected band image output means
- 151: program
- 152: multiband image
- 152-1: R-band image
- 152-2: G-band image
- 152-3: B-band image
- 153: position difference information
- 153-1: position difference information
- 153-2: position difference information
- 154: corrected multiband image
- 154-1: corrected R-band image
- 154-2: corrected G-band image
- 154-3: corrected B-band image
- 161: multiband image acquisition unit
- 162: position difference acquisition unit
- 163: corrected multiband image creation unit
- 164: corrected multiband image output unit
- 1621: position difference information creation unit
- 1622: position difference information input unit
- WB: whiteboard

## Claims

1. An image correction device comprising:
a band image acquisition means (21) for acquiring a plurality of wavelength band images obtained by imaging a subject;
a position difference acquisition means (22) for, by using at least one of the wavelength band images as a reference band image and at least one of rest of the wavelength band images as an object band image, acquiring a position difference between the object band image and the reference band image;
a corrected band image creation means (23) for, by using a pixel of the object band image as an object pixel and using each of a plurality of pixels of the reference band image that overlap the object pixel when the object pixel is shifted by the position difference as a corresponding pixel, creating a corrected band image that holds a pixel value of light on the object band image at a pixel position of the reference band image, on a basis of a relationship between pixel values of a plurality of the corresponding pixels;
and a corrected band image output means (24) for outputting the corrected band image; wherein the corrected band image creation means (23) is configured to determine, for each of a plurality of the object pixels, a pixel value of light on the object band image to be allocated from a pixel value of the object pixel to each of positions of the corresponding pixels, on a basis of a relationship between pixel values of the corresponding pixels and an area in which the object pixel and the corresponding pixel overlap, and for each pixel position of the reference band image, to calculate a total sum of the pixel values of light on the object band image allocated from a plurality of pixels of the object band image overlapping the pixel of the reference band image.

2. The image correction device according to claim 1, wherein
the corrected band image creation means (23) is configured to use a ratio of pixel values as the relationship between the pixel values.

3. The image correction device according to claim 2, wherein
the corrected band image creation means (23) is configured to normalize each pixel value of the reference band image by using a minimum pixel value of the reference band image.

4. The image correction device according to claim 1, wherein
the corrected band image creation means (23) is configured to use a difference between pixel values as the relationship between the pixel values.

5. The image correction device according to claim 4, wherein
the corrected band image creation means (23) is configured to normalize each pixel value of the reference band image by using a standard deviation of the pixel value of the reference band image and a standard deviation of the pixel value of the object band image.

6. The image correction device according to any of claims 1 to 5, wherein
the position difference acquisition means (22) is configured to calculate the position difference according to an image correlation between the reference band image and the object band image.

7. The image correction device according to any of claims 1 to 6, wherein
the position difference acquisition means (22) is configured to divide the reference band image and the object band image into a plurality of small regions, and for each of the small regions, to calculate a shift quantity with which the small region of the object band image most closely matches the small region of the reference band image as the position difference of all pixels of the small region of the object band image.

8. The image correction device according to any of claims 1 to 6, wherein
the position difference acquisition means (22) is configured to divide the reference band image and the object band image into a plurality of small regions, and for each of the small regions, to calculate a shift quantity with which the small region of the object band image most closely matches the small region of the reference band image as the position difference of a pixel at a center position in the small region of the object band image, and to calculate the position difference of a pixel other than the pixel at the center position by interpolation processing from the position difference of the pixel at the center position.

9. An image correction method comprising:
acquiring a plurality of wavelength band images obtained by imaging a subject;
by using at least one of the wavelength band images as a reference band image and at least one of rest of the wavelength band images as an object band image, acquiring a position difference between the object band image and the reference band image;
by using a pixel of the object band image as an object pixel and using each of a plurality of pixels of the reference band image that overlap the object pixel when the object pixel is shifted by the position difference as a corresponding pixel, creating a corrected band image that holds a pixel value of light on the object band image at a pixel position of the reference band image, on a basis of a relationship between pixel values of a plurality of the corresponding pixels;
and outputting the corrected band image,
wherein the creating the corrected band image includes determining, for each of a plurality of the object pixels, a pixel value of light on the object band image to be allocated from a pixel value of the object pixel to each of positions of the corresponding pixels, on a basis of a relationship between pixel values of the corresponding pixels and an area in which the object pixel and the corresponding pixel overlap, and for each pixel position of the reference band image, calculating a total sum of the pixel values of light on the object band image allocated from a plurality of pixels of the object band image overlapping the pixel of the reference band image.

10. The image correction method according to claim 9, wherein
in the creating the corrected band image, a ratio of pixel values is used as the relationship between the pixel values.

11. The image correction method according to claim 10, wherein
the creating the corrected band image includes normalizing each pixel value of the reference band image by using a minimum pixel value of the reference band image.

12. The image correction method according to claim 9, wherein
in the creating the corrected band image, a difference between pixel values is used as the relationship between the pixel values.

13. A program for causing a computer to execute the method any of claims 9 to 12.

## Patentansprüche

1. Bildkorrekturvorrichtung, die aufweist:
eine Bandbilderfassungseinrichtung (21) zum Erfassen von mehreren Wellenlängenbandbildern, die durch Abbilden eines Subjekts erhalten werden;
eine Positionsdifferenz-Erfassungseinrichtung (22), um unter Verwendung mindestens eines der Wellenlängenbandbilder als Referenzbandbild und mindestens eines der übrigen Wellenlängenbandbilder als Objektbandbild, eine Positionsdifferenz zwischen dem Objektbandbild und dem Referenzbandbild zu erfassen;
eine Einrichtung (23) zur Erzeugung eines korrigierten Bandbildes, um unter Verwendung eines Pixels des Objektbandbildes als ein Objektpixel und unter Verwendung jedes von mehreren Pixeln des Referenzbandbildes, die das Objektpixel überlappen, wenn das Objektpixel um die Positionsdifferenz verschoben ist, als ein entsprechendes Pixel ein korrigiertes Bandbild, das einen Pixelwert von Licht auf dem Objektbandbild an einer Pixelposition des Referenzbandbildes enthält, auf der Grundlage einer Beziehung zwischen Pixelwerten von mehreren der entsprechenden Pixel zu erzeugen;
und eine Ausgabeeinrichtung (24) für ein korrigiertes Bandbild zum Ausgeben des korrigierten Bandbildes; wobei die Einrichtung (23) zur Erzeugung eines korrigierten Bandbildes konfiguriert ist, für jedes von mehreren Objektpixeln einen Pixelwert von Licht auf dem Objektbandbild, der von einem Pixelwert des Objektpixels zu jeder der Positionen der entsprechenden Pixel zuzuordnen ist, auf der Grundlage einer Beziehung zwischen Pixelwerten der entsprechenden Pixel und einem Bereich zu bestimmen, in dem sich das Objektpixel und das entsprechende Pixel überlappen, und für jede Pixelposition des Referenzbandbildes eine Gesamtsumme der Pixelwerte des Lichts auf dem Objektbandbild zu berechnen, die aus mehreren Pixeln des Objektbandbildes zugeordnet werden, die das Pixel des Referenzbandbildes überlappen.

2. Bildkorrekturvorrichtung nach Anspruch 1, wobei
die Einrichtung (23) zur Erzeugung eines korrigierten Bandbildes konfiguriert ist, ein Verhältnis von Pixelwerten als Beziehung zwischen den Pixelwerten zu verwenden.

3. Bildkorrekturvorrichtung nach Anspruch 2, wobei
die Einrichtung (23) zur Erzeugung eines korrigierten Bandbildes konfiguriert ist, jeden Pixelwert des Referenzbandbildes unter Verwendung eines minimalen Pixelwertes des Referenzbandbildes zu normieren.

4. Bildkorrekturvorrichtung nach Anspruch 1, wobei
die Einrichtung (23) zur Erzeugung eines korrigierten Bandbildes konfiguriert ist, eine Differenz zwischen Pixelwerten als Beziehung zwischen den Pixelwerten zu verwenden.

5. Bildkorrekturvorrichtung nach Anspruch 4, wobei
die Einrichtung (23) zur Erzeugung eines korrigierten Bandbildes konfiguriert ist, jeden Pixelwert des Referenzbandbildes unter Verwendung einer Standardabweichung des Pixelwertes des Referenzbandbildes und einer Standardabweichung des Pixelwertes des Objektbandbildes zu normieren.

6. Bildkorrekturvorrichtung nach einem der Ansprüche 1 bis 5, wobei
die Positionsdifferenz-Erfassungseinrichtung (22) konfiguriert ist, die Positionsdifferenz gemäß einer Bildkorrelation zwischen dem Referenzbandbild und dem Objektbandbild zu berechnen.

7. Bildkorrekturvorrichtung nach einem der Ansprüche 1 bis 6, wobei
die Positionsdifferenz-Erfassungseinrichtung (22) konfiguriert ist, das Referenzbandbild und das Objektbandbild in mehrere kleine Bereiche aufzuteilen und für jeden der kleinen Bereiche eine Verschiebungsgröße, mit der der kleine Bereich des Objektbandbildes am nächsten mit dem kleinen Bereich des Referenzbandbildes übereinstimmt, als die Positionsdifferenz aller Pixel des kleinen Bereichs des Objektbandbildes zu berechnen.

8. Bildkorrekturvorrichtung nach einem der Ansprüche 1 bis 6, wobei
die Positionsdifferenz-Erfassungseinrichtung (22) konfiguriert ist, das Referenzbandbild und das Objektbandbild in mehrere kleine Bereiche aufzuteilen und für jeden der kleinen Bereiche eine Verschiebungsgröße, mit der der kleine Bereich des Objektbandbildes am nächsten mit dem kleinen Bereich des Referenzbandbildes übereinstimmt, als die Positionsdifferenz eines Pixels an einer Mittenposition in dem kleinen Bereich des Objektbandbildes zu berechnen und die Positionsdifferenz eines anderen Pixels als des Pixels an der Mittenposition durch Interpolationsverarbeitung aus der Positionsdifferenz des Pixels an der Mittenposition zu berechnen.

9. Bildkorrekturverfahren, das aufweist
Erfassen von mehreren Wellenlängenbandbildern, die durch Abbilden eines Subjekts erhalten werden;
unter Verwendung mindestens eines der Wellenlängenbandbilder als Referenzbandbild und mindestens eines der übrigen Wellenlängenbandbilder als Objektbandbild, Erfassen einer Positionsdifferenz zwischen dem Objektbandbild und dem Referenzbandbild; unter Verwendung eines Pixels des Objektbandbildes als ein Objektpixel und unter Verwendung jedes von mehreren Pixeln des Referenzbandbildes, die das Objektpixel überlappen, wenn das Objektpixel um die Positionsdifferenz verschoben wird, als ein entsprechendes Pixel, Erzeugen eines korrigierten Bandbildes, das einen Pixelwert von Licht auf dem Objektbandbild an einer Pixelposition des Referenzbandbildes enthält, auf der Grundlage einer Beziehung zwischen Pixelwerten einer Vielzahl der entsprechenden Pixel;
und Ausgeben des korrigierten Bandbildes,
wobei das Erzeugen des korrigierten Bandbildes das Bestimmen, für jedes von mehreren Objektpixeln, eines Pixelwertes von Licht auf dem Objektbandbild, der von einem Pixelwert des Objektpixels jeder der Positionen der entsprechenden Pixel zuzuordnen ist, auf der Grundlage einer Beziehung zwischen Pixelwerten der entsprechenden Pixel und einem Bereich, in dem das Objektpixel und das entsprechende Pixel überlappen, und für jede Pixelposition des Referenzbandbildes das Berechnen einer Gesamtsumme der Pixelwerte von Licht auf dem Objektbandbild aufweist, die aus mehreren Pixeln des Objektbandbildes zugeordnet werden, die das Pixel des Referenzbandbildes überlappen.

10. Bildkorrekturverfahren nach Anspruch 9, wobei
beim Erzeugen des korrigierten Bandbildes ein Verhältnis von Pixelwerten als Beziehung zwischen den Pixelwerten verwendet wird.

11. Bildkorrekturverfahren nach Anspruch 10, wobei
das Erzeugen des korrigierten Bandbildes das Normieren jedes Pixelwertes des Referenzbandbildes unter Verwendung eines minimalen Pixelwertes des Referenzbandbildes aufweist.

12. Bildkorrekturverfahren nach Anspruch 9, wobei
beim Erzeugen des korrigierten Bandbildes eine Differenz zwischen Pixelwerten als die Beziehung zwischen den Pixelwerten verwendet wird.

13. Programm, um einen Computer zu veranlassen, das Verfahren nach einem der Ansprüche 9 bis 12 auszuführen.

## Revendications

1. Dispositif de correction d'image, comprenant :
un moyen d'acquisition d'images de bande (21) destiné à acquérir une pluralité d'images de bande de longueur d'onde obtenues par imagerie d'un sujet ;
un moyen d'acquisition de différence de position (22) destiné, en utilisant au moins une des images de bande de longueur d'onde en tant qu'image de bande de référence et au moins une des autres images de bande de longueur d'onde en tant qu'image de bande objet, à acquérir une différence de position entre l'image de bande objet et l'image de bande de référence ;
un moyen de création d'image de bande corrigée (23) destiné, en utilisant un pixel de l'image de bande objet en tant que pixel objet et en utilisant chaque pixel d'une pluralité de pixels de l'image de bande de référence chevauchant le pixel objet lorsque le pixel objet est décalé de la différence de position en tant que pixel correspondant, à créer une image de bande corrigée contenant une valeur de pixel de lumière sur l'image de bande objet à une position de pixel de l'image de bande de référence, sur la base d'une relation entre les valeurs de pixel d'une pluralité de pixels correspondants ;
et un moyen de sortie d'image de bande corrigée (24) destiné à sortir l'image de bande corrigée ; où le moyen de création d'image de bande corrigée (23) est configuré pour déterminer, pour chaque pixel d'une pluralité de pixels objets, une valeur de pixel de la lumière sur l'image de bande objet à attribuer à partir d'une valeur du pixel objet à chacune des positions des pixels correspondants, sur la base d'une relation entre les valeurs de pixel des pixels correspondants et une zone où le pixel objet et le pixel correspondant se chevauchent, et pour chaque position de pixel de l'image de bande de référence, calculer une somme totale des valeurs de pixel de la lumière sur l'image de bande de objet attribuées à partir d'une pluralité de pixels de l'image de bande objet chevauchant le pixel de l'image de bande de référence.

2. Dispositif de correction d'image selon la revendication 1, où
le moyen de création d'image de bande corrigée (23) est configuré pour utiliser un rapport de valeurs de pixel en tant que relation entre les valeurs de pixel.

3. Dispositif de correction d'image selon la revendication 2, où
le moyen de création d'image de bande corrigée (23) est configuré pour normaliser chaque valeur de pixel de l'image de bande de référence au moyen d'une valeur de pixel minimale de l'image de bande de référence.

4. Dispositif de correction d'image selon la revendication 1, où
le moyen de création d'image de bande corrigée (23) est configuré pour utiliser une différence entre les valeurs de pixel en tant que relation entre les valeurs de pixel.

5. Dispositif de correction d'image selon la revendication 4, où
le moyen de création d'image de bande corrigée (23) est configuré pour normaliser chaque valeur de pixel de l'image de bande de référence au moyen d'un écart type de la valeur de pixel de l'image de bande de référence et d'un écart type de la valeur de pixel de l'image de bande objet.

6. Dispositif de correction d'image selon l'une des revendications 1 à 5, où
le moyen d'acquisition de différence de position (22) est configuré pour calculer la différence de position en fonction d'une corrélation d'image entre l'image de bande de référence et l'image de bande objet.

7. Dispositif de correction d'image selon l'une des revendications 1 à 6, où
le moyen d'acquisition de différence de position (22) est configuré pour diviser l'image de bande de référence et l'image de bande objet en une pluralité de petites zones et, pour chacune des petites zones, calculer une quantité de décalage par laquelle la petite zone de l'image de bande objet correspond le plus étroitement à la petite zone de l'image de bande de référence, en tant que différence de position de tous les pixels de la petite zone de l'image de bande objet.

8. Dispositif de correction d'image selon l'une des revendications 1 à 6, où
le moyen d'acquisition de différence de position (22) est configuré pour diviser l'image de bande de référence et l'image de bande objet en une pluralité de petites zones et, pour chacune des petites zones, calculer une quantité de décalage par laquelle la petite zone de l'image de bande objet correspond le plus étroitement à la petite zone de l'image de bande de référence en tant que différence de position d'un pixel sur une position centrale dans la petite zone de l'image de bande objet, et pour calculer la différence de position d'un pixel autre que le pixel sur la position centrale par traitement d'interpolation à partir de la différence de position du pixel sur la position centrale.

9. Procédé de correction d'image, comprenant :
l'acquisition d'une pluralité d'images de bande de longueur d'onde obtenues par imagerie d'un sujet ;
en utilisant au moins une des images de bande de longueur d'onde en tant qu'image de bande de référence, et au moins une des autres images de bande de longueur d'onde en tant qu'image de bande objet, acquérir une différence de position entre l'image de bande objet et l'image de bande de référence ;
en utilisant un pixel de l'image de bande objet en tant que pixel objet et chaque pixel d'une pluralité de pixels de l'image de bande de référence chevauchant le pixel objet lorsque le pixel objet est décalé de la différence de position en tant que pixel correspondant, créer une image de bande corrigée contenant une valeur de pixel de lumière sur l'image de bande objet à une position de pixel de l'image de bande de référence, sur la base d'une relation entre les valeurs de pixel d'une pluralité de pixels correspondants ;
et la sortie de l'image de bande corrigée,
où la création de l'image corrigée comprend la détermination, pour chaque pixel d'une pluralité de pixels objets, d'une valeur de pixel de la lumière sur l'image de bande objet à attribuer à partir d'une valeur du pixel objet à chacune des positions des pixels correspondants, sur la base d'une relation entre les valeurs de pixel des pixels correspondants et une zone où le pixel objet et le pixel correspondant se chevauchent, et pour chaque position de pixel de l'image de bande de référence, le calcul d'une somme totale des valeurs de pixel de la lumière sur l'image de bande de objet attribuées à partir d'une pluralité de pixels de l'image de bande objet chevauchant le pixel de l'image de bande de référence.

10. Procédé de correction d'image selon la revendication 9, où,
lors de la création de l'image de bande corrigée, un rapport de valeurs de pixel est utilisé en tant que relation entre les valeurs de pixel.

11. Procédé de correction d'image selon la revendication 10, où
la création de l'image de bande corrigée comprend la normalisation de chaque valeur de pixel de l'image de bande de référence au moyen d'une valeur de pixel minimale de l'image de bande de référence.

12. Procédé de correction d'image selon la revendication 9, où,
lors de la création de l'image de bande corrigée, une différence entre les valeurs de pixel est utilisée en tant que relation entre les valeurs de pixel.

13. Programme, entraînant l'exécution par un ordinateur du procédé selon l'une des revendications 9 à 12.
